# EUROPEAN PATENT APPLICATION

(11) **EP 4 512 535 A1**
(43) Date of publication of application: **26.02.2025**
(21) Application number: 24189392.4
(22) Date of filing: 18.07.2024
(51) Int. Cl.: B05B 7/24, B05B 15/25, B05B 15/58, B05B 7/08, B64F 5/10

(54) **SPRAY GUN ASSEMBLIES, METHODS AND SYSTEMS FOR APPLYING COATING WITH PLURAL COMPONENTS**

(30) Priority: 23.08.2023 US 202318454201
(71) Applicant: The Boeing Company, Arlington, VA 22202 (US)
(72) Inventor: Schuette, Waynie M., Arlington, VA 22202 (US); Adams, Scott A., Arlington, VA 22202 (US); Dillard, Anthony E., Arlington, VA 22202 (US)
(74) Representative: Witte, Weller & Partner Patentanwälte mbB

(57) **Abstract**

A spray gun assembly (100) for applying a coating with plural components includes a nozzle (102), a main pneumatic inlet (104), an atomizing air flow path (110), a fan air flow path (112), a colloidal feed inlet (114), an internal atomizing outlet (120), a pressurized feed inlet (122), and a catalyst outlet (128). The nozzle includes a main atomizing outlet and a fan air outlet. The main pneumatic inlet receives compressed air from a compressed air source (108). The colloidal feed inlet receives a colloidal suspension component of the coating via gravity feed from a gravity feed container (116). The pressurized feed inlet receives a catalyst component of the coating from a pressurized feed container (124). The catalyst outlet expels the catalyst component in the fan air flow path proximate the nozzle. A method for applying a coating with plural components is also provided. A system includes the gravity feed container, the pressurized feed container and the spray gun assembly.

## Description

### FIELD

The present disclosure relates generally to applying coatings with plural components using spray gun assemblies and, particularly, to applying coatings with a colloidal suspension component and a catalyst component. For example, various techniques for continuously mixing the colloidal suspension component are contemplated. Similarly, various techniques for mixing the colloidal suspension outside the spray gun assembly are contemplated.

### BACKGROUND

Coatings may be created by mixing two materials at a precise ratio and applied to a surface with a paint spray gun. One of the material components may contain solid particles that will fall out of suspension if it is not agitated. Once the two materials are mixed, they begin to react and may not be usable after a short period of time (e.g., five to fifteen minutes). These constraints make it difficult to apply coating with plural components to large areas because the short pot-life (e.g., usable life multiple part coatings can be applied to a surface) is very short and only a small volume can be prepared at a time. For example, a common method of applying such coatings is to manually mix a very small quantity (e.g., 6-28 ounces), put it in a small paint "cup gun" and apply it to the target surface. Only a small volume can be applied and if any delays are encountered the liquid must be discarded and a new batch mixed. Accidentally exceeding the short pot-life time limit could result in coating loss during flight and/or corrosion issues and will require all paint applied on top of the coating to be sanded off and re-applied.

Accordingly, those skilled in the art continue with research and development efforts to improve techniques for applying coating with plural components.

### SUMMARY

Disclosed are examples of spray gun assemblies, methods and systems for applying a coating with plural components. The following is a non-exhaustive list of examples, which may or may not be claimed, of the subject matter according to the present disclosure.

In an example, the disclosed spray gun assembly for applying a coating with plural components includes a nozzle, a main pneumatic inlet, an atomizing air flow path, a fan air flow path, a colloidal feed inlet, an internal atomizing outlet, a pressurized feed inlet, and a catalyst outlet. The nozzle includes a main atomizing outlet and a fan air outlet. The main pneumatic inlet is configured to receive compressed air from a compressed air source. The atomizing air flow path between the main pneumatic inlet and the main atomizing outlet of the nozzle. The fan air flow path between the main pneumatic inlet and the fan air outlet of the nozzle. The colloidal feed inlet in fluid communication with a gravity feed container and configured to receive a colloidal suspension component of the coating via gravity feed from the gravity feed container. The internal atomizing outlet in fluid communication with the colloidal feed inlet and the atomizing air flow path proximate the nozzle. The pressurized feed inlet in fluid communication with a pressurized feed container and configured to receive a catalyst component of the coating from the pressurized feed container. The catalyst outlet in fluid communication with the pressurized feed inlet and the fan air flow path proximate the nozzle.

In an example, the disclosed method for applying a coating with plural components includes: (1) receiving compressed air at an atomizing air flow path and a fan air flow path of a spray gun assembly; (2) receiving a colloidal flow of a colloidal suspension component of the coating via gravity feed at a colloidal feed inlet of the spray gun assembly; (3) receiving a catalyst flow of a catalyst component of the coating at a catalyst feed inlet of the spray gun assembly; (4) routing the colloidal flow to the atomizing air flow path of the spray gun assembly; (5) initiating atomization of the colloidal suspension component in response to the compressed air flowing through the atomizing air flow path; (6) routing the colloidal suspension component in at least partially atomized form to a main atomizing outlet in a nozzle of the spray gun assembly in response to the compressed air flowing through the atomizing air flow path; (7) routing the compressed air flowing in the fan air flow path to a fan air outlet of the nozzle; (8) routing the catalyst flow to a catalyst outlet of the spray gun assembly proximate the fan air outlet of the nozzle; (9) continuing atomization of the colloidal suspension after exiting the main atomizing outlet in response to the compressed air flowing out the main atomizing outlet of the nozzle; (10) atomizing the catalyst component after exiting the fan air outlet and in response to compressed air flowing through the fan air flow path and out the fan air outlet of the nozzle; and (11) mixing the catalyst component in atomized form with the colloidal suspension component in atomized form while in flight from the spray gun assembly to a target substrate.

In an example, the disclosed system for applying a coating with plural components includes a gravity feed container, a pressurized feed container, and a spray gun assembly. The gravity feed container configured to hold a colloidal suspension component of the coating. The pressurized feed container is configured to hold a catalyst component of the coating. The spray gun assembly is configured to apply the coating with the plural components to a target substrate. The spray gun assembly includes a nozzle, a main pneumatic inlet, an atomizing air flow path, a fan air flow path, a colloidal feed inlet, an internal atomizing outlet, a pressurized feed inlet, and a catalyst outlet. The nozzle includes a main atomizing outlet and a fan air outlet. The main pneumatic inlet is configured to receive compressed air from a compressed air source. The atomizing air flow path between the main pneumatic inlet and the main atomizing outlet of the nozzle. The fan air flow path between the main pneumatic inlet and the fan air outlet of the nozzle. The colloidal feed inlet in fluid communication with a gravity feed container and configured to receive the colloidal suspension component from the gravity feed container. The internal atomizing outlet in fluid communication with the colloidal feed inlet and the atomizing air flow path proximate the nozzle. The pressurized feed inlet in fluid communication with a pressurized feed container and configured to receive the catalyst component from the pressurized feed container. The catalyst outlet in fluid communication with the pressurized feed inlet and the fan air flow path proximate the nozzle.

Other examples of the disclosed spray gun assemblies, methods and systems for applying a coating with plural components will become apparent from the following detailed description, the accompanying drawings and the appended claims.

### BRIEF DESCRIPTION OF THE DRAWINGS

Fig. 1A is a functional block diagram showing an example of a spray gun assembly for applying a coating with plural components;
Fig. 1B is a functional diagram showing another example of a spray gun assembly for applying a coating with plural components;
Fig. 2A is an end view of an example of a nozzle used in the spray gun assembly of Fig. 1B;
Fig. 2B is a drawing that represents an example of a colloidal suspension component used by the spray gun assembly of Fig. 1B;
Fig. 3 is a functional diagram showing yet another example of a spray gun assembly for applying a coating with plural components;
Fig. 4 is a functional diagram showing various examples of adjustment mechanisms for the spray gun assembly of Fig. 1B;
Figs. 5A-B provide a flow diagram of an example of a method for applying a coating with plural components;
Fig. 6, in combination with Figs. 5A-B, is a flow diagram of another example of a method for applying a coating with plural components;
Fig. 7, in combination with Fig. 5A-B, is a flow diagram of yet another example of a method for applying a coating with plural components;
Fig. 8, in combination with Fig. 5A-B, is a flow diagram of still another example of a method for applying a coating with plural components;
Fig. 9, in combination with Fig. 5A-B, is a flow diagram of still yet another example of a method for applying a coating with plural components;
Fig. 10, in combination with Fig. 5A-B, is a flow diagram of another example of a method for applying a coating with plural components;
Fig. 11, in combination with Fig. 5A-B, is a flow diagram of yet another example of a method for applying a coating with plural components;
Fig. 12 is a functional block diagram of an example of a system for applying a coating with plural components;
Fig. 13 is a functional block diagram of another example of a system for applying a coating with plural components;
Fig. 14 is a functional block diagram of yet another example of a system for applying a coating with plural components;
Fig. 15 is a block diagram of aircraft production and service methodology that implements one or more of the examples of methods for applying a coating with plural components disclosed herein; and
Fig. 16 is a schematic illustration of an aircraft that incorporates target substrates upon which a coating with plural components is applied using one or more of the examples of spray gun assemblies, methods and systems disclosed herein.

### DETAILED DESCRIPTION

The various examples of spray gun assemblies, methods and systems for applying a coating with plural components provide techniques for on-demand mixing, and application of multi-component, time sensitive coating materials with the capability of continuously agitating material components and only requiring a compressed air source. For example, this allows the application of corrosion resistant sol-gel coatings. Moreover, this enables the application of coatings with a short pot-life (e.g., 10 minutes). After the pot-life of a coating expires, the coating is no longer reliable, and it must be discarded.

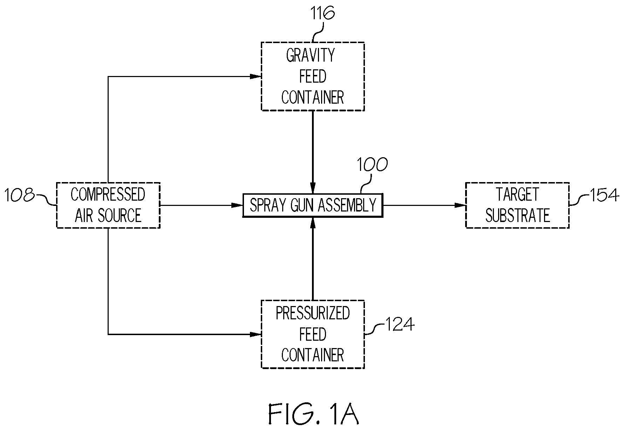

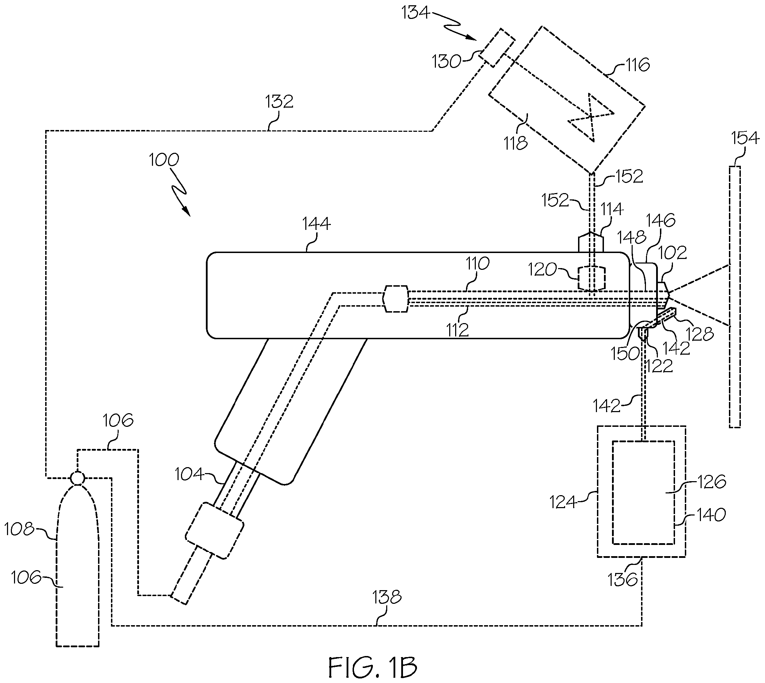

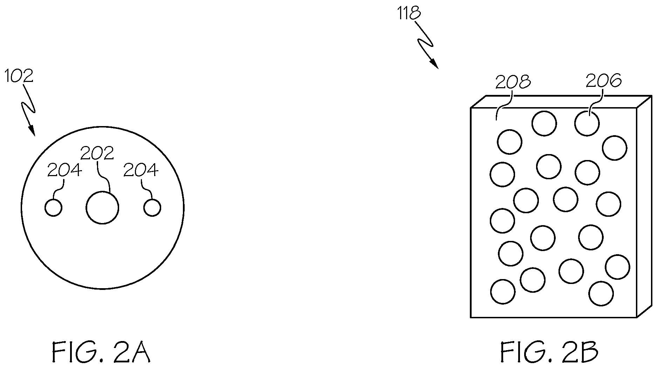

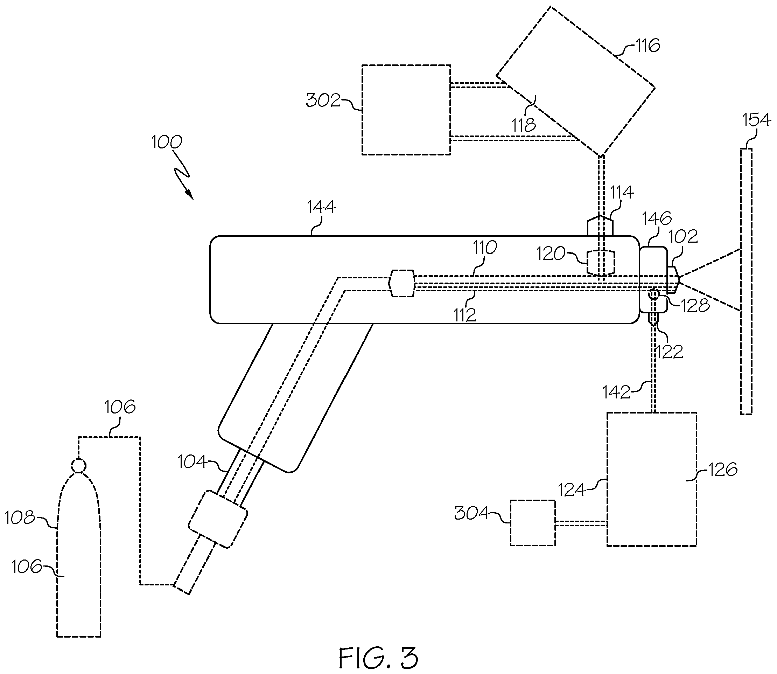

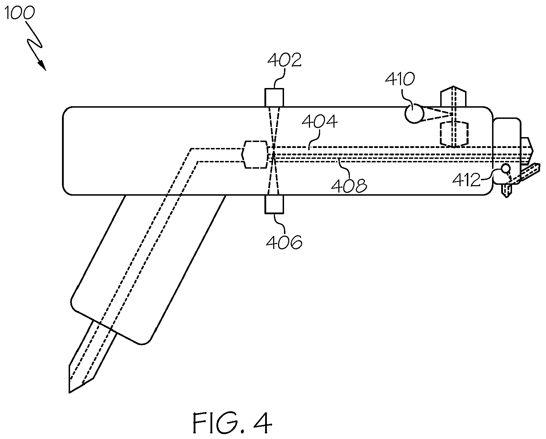

Referring generally to Figs. 1A, 1B, 2A, 2B, 3 and 4, by way of examples, the present disclosure is directed to a spray gun assembly 100 for applying a coating with plural components. Figs. 1A and 1B disclose examples of the spray gun assembly 100. Fig. 2A shows an end view of an example of a nozzle 102 used in the spray gun assembly 100. Fig. 2B provides a drawing that represents an example of a colloidal suspension component 118 used by the spray gun assembly 100. Fig. 3 provides a functional diagram of another example of the spray gun assembly 100. Fig. 4 provides a functional diagram showing various examples of adjustment mechanisms 402, 406, 410, 412 for the spray gun assembly 100.

Fig. 1A shows an example of the spray gun assembly 100 for applying a coating with plural components. The spray gun assembly 100 interfaces with a compressed air source 108, a gravity feed container 116, a pressurized feed container 124 and a target substrate. The spray gun assembly 100 receives compressed air 106 from the compressed air source 108. The spray gun assembly 100 receives a colloidal suspension component 118 of the coating from the gravity feed container 116. The spray gun assembly receives a catalyst component 126 of the coating from the pressurized feed container 124. The spray gun assembly 100 is configured to separately project the colloidal suspension component 118 and the catalyst component 126 toward the target substrate 154. The colloidal suspension component 118 is atomized, at least partially internally and partially after being projected, by the spray gun assembly 100. The catalyst component 126 may be partially atomized internally and also atomized after being projected. The atomized colloidal suspension component 118 and the atomized catalyst component 126 are mixed to form the coating while in flight from the spray gun assembly 100 to the target substrate 154.

With reference again to Figs. 1A, 1B, 2A, 2B, 3 and 4, in one or more examples, a spray gun assembly 100 for applying a coating with plural components includes a nozzle 102, a main pneumatic inlet 104, an atomizing air flow path 110, a fan air flow path 112, a colloidal feed inlet 114, an internal atomizing outlet 120, a pressurized feed inlet 122 and a catalyst outlet 128. The nozzle 102 includes a main atomizing outlet 202 and a fan air outlet 204. The main pneumatic inlet 104 configured to receive compressed air 106 from a compressed air source 108. The atomizing air flow path 110 between the main pneumatic inlet 104 and the main atomizing outlet 202 of the nozzle 102. The fan air flow path 112 between the main pneumatic inlet 104 and the fan air outlet 204 of the nozzle 102. The colloidal feed inlet 114 in fluid communication with a gravity feed container 116 and configured to receive a colloidal suspension component 118 of the coating via gravity feed from the gravity feed container 116. The internal atomizing outlet 120 in fluid communication with the colloidal feed inlet 114 and the atomizing air flow path 110 proximate the nozzle 102. The pressurized feed inlet 122 is in fluid communication with a pressurized feed container 124 and configured to receive a catalyst component 126 of the coating from the pressurized feed container 124. The catalyst outlet 128 in fluid communication with the pressurized feed inlet 122 and the fan air flow path 112 proximate the nozzle 102. For example, the compressed air 106 supplied to the main pneumatic inlet 104 may be supplied at approximately 30 psi or at any suitable pressure.

In another example of the spray gun assembly 100, the gravity feed container 116 is configured to hold the colloidal suspension component 118.

In yet another example of the spray gun assembly 100, the colloidal suspension component 118 includes a plurality of particles 206 suspended in a liquid 208. In a further example, the gravity feed container 116 is configured to maintain suspension of the plurality of particles 206 in the liquid 208.

In still another example of the spray gun assembly 100, the gravity feed container 116 uses agitation or recirculation to mix the colloidal suspension component 118.

In still yet another example of the spray gun assembly 100, the gravity feed container 116 includes a regulated pneumatic inlet 130 and an agitator 134. The regulated pneumatic inlet 130 configured to receive regulated compressed air 132 from the compressed air source 108. The agitator 134 is configured to receive the regulated compressed air 132 via the regulated pneumatic inlet 130 and configured to stir the colloidal suspension component 118 in response to receiving the regulated compressed air 132. For example, the regulated compressed air 132 supplied to the regulated pneumatic inlet 130 may be supplied at approximately 30 psi or at any suitable pressure.

In another example of the spray gun assembly 100, the gravity feed container 116 includes a colloidal pump 302 configured to recirculate the colloidal suspension component 118.

In yet another example of the spray gun assembly 100, the colloidal suspension component 118 is gravity fed from the gravity feed container 116 to the colloidal feed inlet 114 during operation of the spray gun assembly 100.

In still another example of the spray gun assembly 100, the pressurized feed container 124 is configured to hold the catalyst component 126.

In still yet another example of the spray gun assembly 100, the pressurized feed container 124 includes a regulated pneumatic inlet 136 and a bladder 140. The regulated pneumatic inlet 136 configured to receive regulated compressed air 138 from the compressed air source 108. The bladder 140 configured to hold the catalyst component 126 and to provide a catalyst flow 142 from the pressurized feed container 124 to the pressurized feed inlet 122 of the spray gun assembly 100 in response to receiving the regulated compressed air 138. For example, the regulated compressed air 138 supplied to the regulated pneumatic inlet 136 may be supplied at approximately 10 psi or at any suitable pressure.

In another example of the spray gun assembly 100, the pressurized feed container 124 includes a catalyst pump 304 configured to provide a catalyst flow 142 from the pressurized feed container 124 to the pressurized feed inlet 122 of the spray gun assembly 100.

In yet another example of the spray gun assembly 100, the catalyst component 126 is configured to activate the colloidal suspension component 118 after contact therewith to form the coating.

In still another example of the spray gun assembly 100, during operation of the spray gun assembly 100, the atomizing air flow path 110 extends through the main atomizing outlet 202 of the nozzle 102 and the fan air flow path 112 extends through the fan air outlet 204 of the nozzle 102.

In still yet another example, the spray gun assembly 100 also includes an atomizing air adjustment mechanism 402 configured to control an atomizing air pressure 404 within the atomizing air flow path 110 during operation of the spray gun assembly 100.

In another example, the spray gun assembly 100 also includes a fan air adjustment mechanism 406 configured to control a fan air pressure 408 within the fan air flow path 112 during operation of the spray gun assembly 100.

In yet another example, the spray gun assembly 100 also includes a spray gun body 144. The spray gun body 144 including the main pneumatic inlet 104, the atomizing air flow path 110 and the fan air flow path 112.

In still another example, the spray gun assembly 100 also includes an air cap assembly 146 disposed proximate the nozzle 102 and in fluid communication with the atomizing air flow path 110 and the fan air flow path 112. The air cap assembly 146 including the colloidal feed inlet 114, the internal atomizing outlet 120, a colloidal flow path 148 between the colloidal feed inlet 114 and the internal atomizing outlet 120, the pressurized feed inlet (122), the catalyst outlet 128 and a catalyst flow path 150 between the pressurized feed inlet 122 and the catalyst outlet 128. In a further example, the air cap assembly 146 also includes a colloidal adjustment mechanism 410 configured to control a colloidal flow 152 within the colloidal flow path 148 during operation of the spray gun assembly 100. In another further example, the air cap assembly 146 also includes a catalyst adjustment mechanism 412 configured to control a catalyst flow 142 within the catalyst flow path 150 during operation of the spray gun assembly 100.

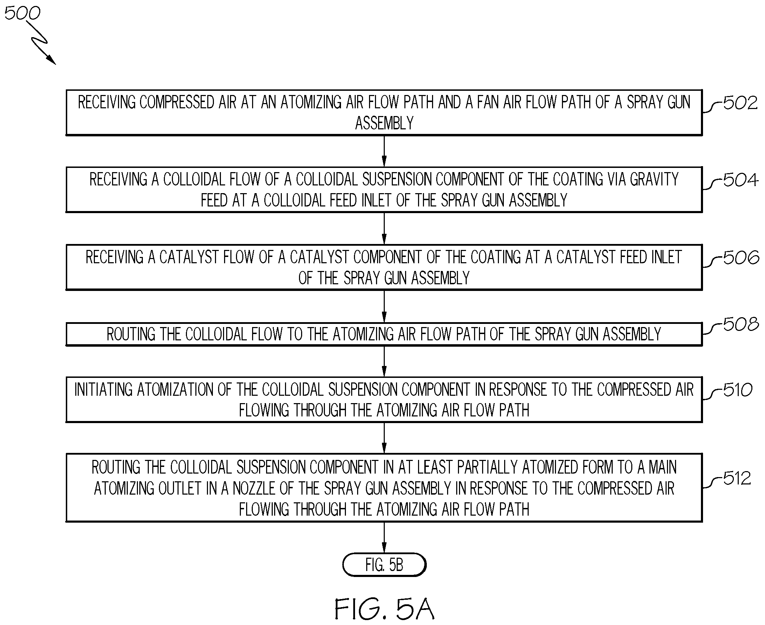

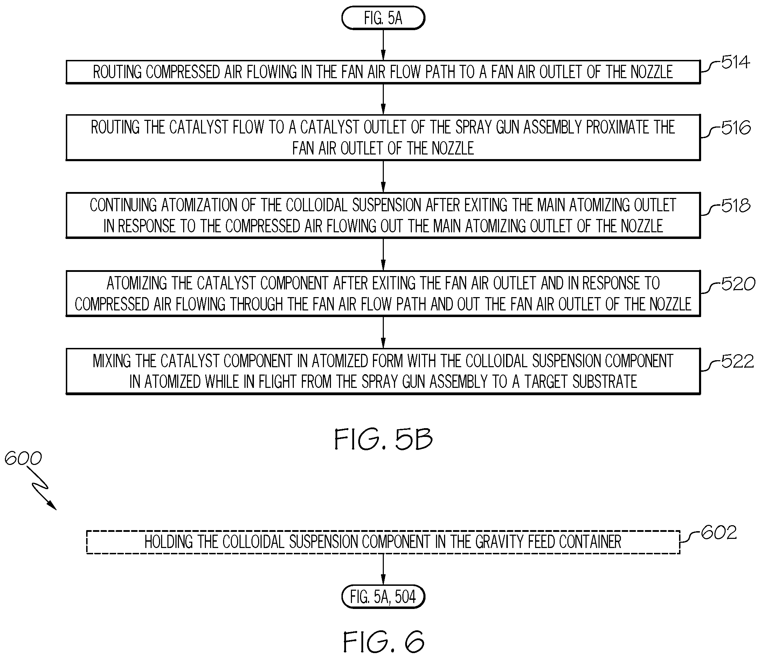

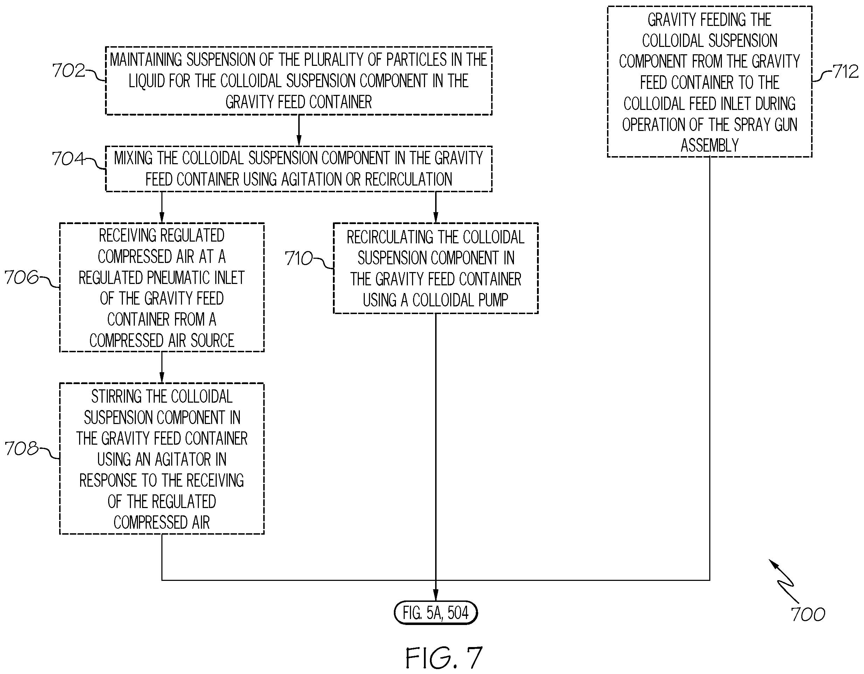

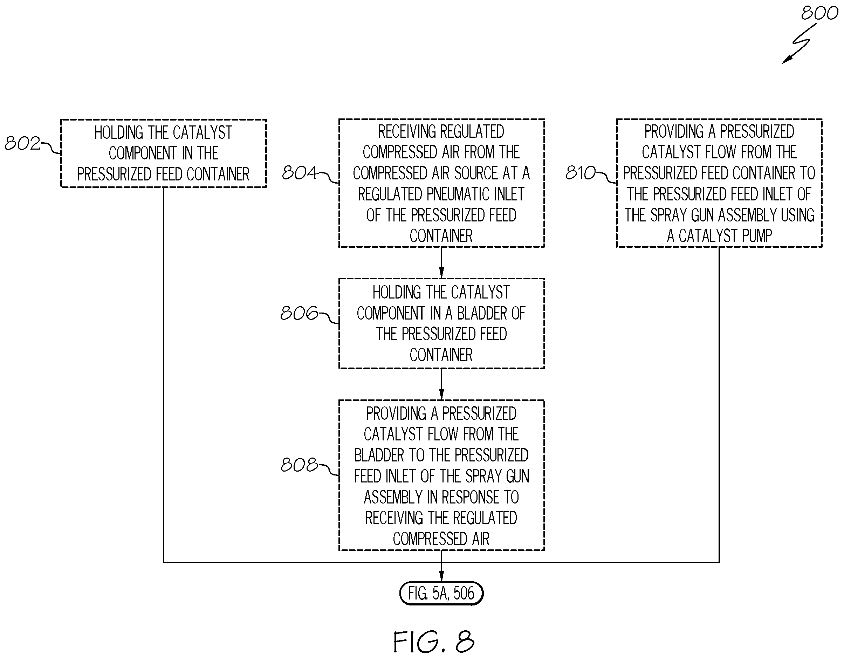

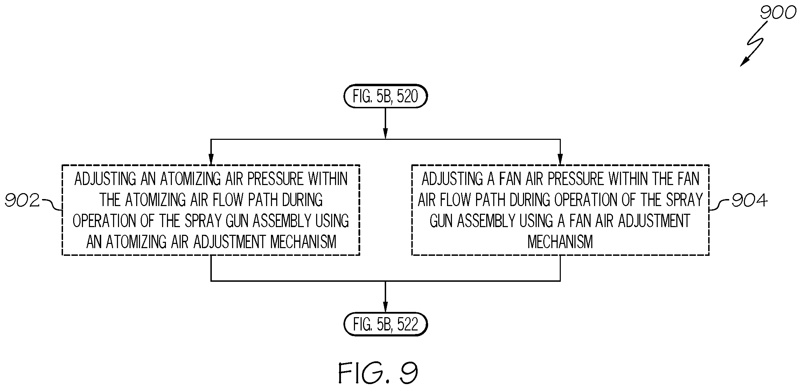

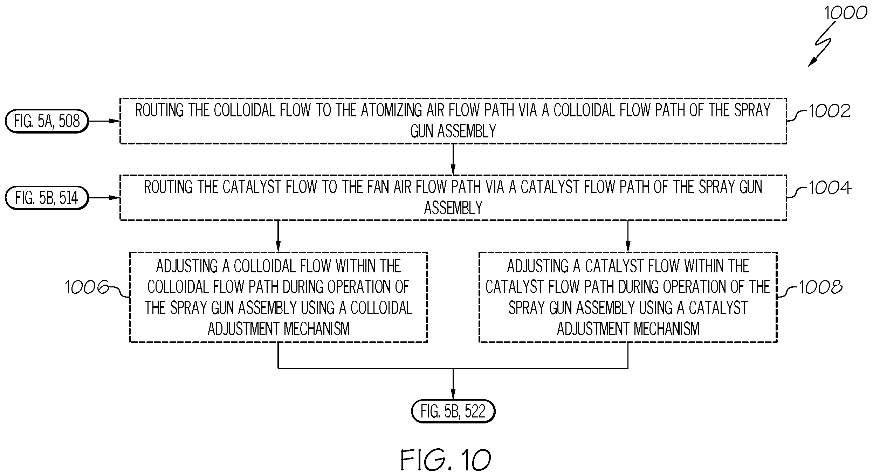

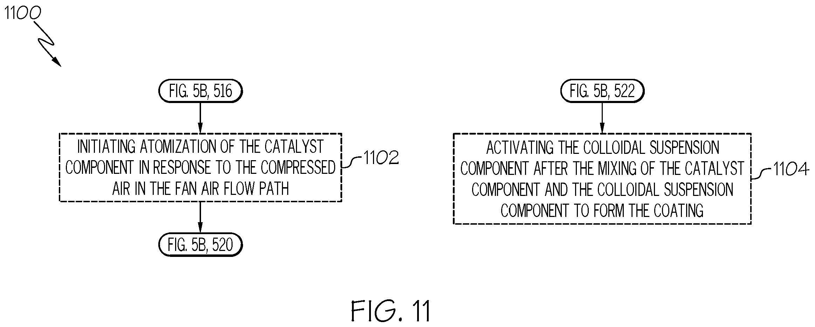

Referring generally to Figs. 1A, 1B, 2A, 2B, 3, 4, 5A-B and 6-11, by way of examples, the present disclosure is directed to various methods 500, 600, 700, 800, 900, 1000, 1100 for applying a coating with plural components. Figs. 1A and 1B disclose examples of the spray gun assembly 100. Fig. 2A shows an end view of an example of a nozzle 102 used in the spray gun assembly 100. Fig. 2B provides a drawing that represents an example of a colloidal suspension component 118 used by the spray gun assembly 100. Fig. 3 provides a functional diagram of another example of the spray gun assembly 100. Fig. 4 provides a functional diagram showing various examples of adjustment mechanisms 402, 406, 410, 412 for the spray gun assembly 100. Figs. 5A-B disclose an example of the method 500. Fig. 6, in combination with Figs. 5A-B, disclose another example of the method 600. Fig. 7, in combination with Figs. 5A-B, disclose yet another example of the method 700. Fig. 8, in combination with Figs. 5A-B, disclose still another example of the method 800. Fig. 9, in combination with Figs. 5A-B, disclose still yet another example of the method 900. Fig. 10, in combination with Figs. 5A-B, disclose another example of the method 1000. Fig. 11, in combination with Figs. 5A-B, disclose yet another example of the method 1100.

With reference again to Figs. 1A, 1B, 2A, 2B and 5A-B, in one or more examples, a method 500 (see Fig. 5) for applying a coating with plural components includes receiving 502 compressed air 106 at an atomizing air flow path 110 and a fan air flow path 112 of a spray gun assembly 100. At 504, a colloidal flow 152 of a colloidal suspension component 118 of the coating is received via gravity feed at a colloidal feed inlet 114 of the spray gun assembly 100. At 506, a catalyst flow 142 of a catalyst component 126 of the coating is received at a catalyst feed inlet of the spray gun assembly 100. At 508, the colloidal flow 152 is routed to the atomizing air flow path 110 of the spray gun assembly 100. At 510, atomization of the colloidal suspension component 118 is initiated in response to the compressed air 106 flowing through the atomizing air flow path 110. At 512, the colloidal suspension component 118, in at least partially atomized form, is routed to a main atomizing outlet 202 in a nozzle 102 of the spray gun assembly 100 in response to the compressed air 106 flowing through the atomizing air flow path 110. At 514, the compressed air 106 flowing in the fan air flow path 112 is routed to a fan air outlet 204 of the nozzle 102. At 516, the catalyst flow 142 is routed to a catalyst outlet 128 of the spray gun assembly 100 proximate the fan air outlet 204 of the nozzle 102. At 518, atomization of the colloidal suspension is continued after exiting the main atomizing outlet 202 in response to the compressed air 106 flowing out the main atomizing outlet 202 of the nozzle 102. At 520, the catalyst component 126 is atomized after exiting the fan air outlet 204 and in response to compressed air 106 flowing through the fan air flow path 112 and out the fan air outlet 204 of the nozzle 102. At 522, the catalyst component 126, in atomized form, is mixed with the colloidal suspension component 118, in atomized form, while in flight from the spray gun assembly 100 to a target substrate 154.

In another example of the method 500, the compressed air 106 is received from a compressed air source 108.

In yet another example of the method 500, the colloidal suspension component 118 is received from a gravity feed container 116.

With reference again to Figs. 1A, 1B, 2A, 2B, 5A-B and 6, in one or more examples, a method 600 (see Fig. 6) for applying a coating with plural components includes the method 500 of Figs. 5A-B. The method 600 begins at 602 where the colloidal suspension component 118 is held in the gravity feed container 116. The method 600 continues from 602 to 504 (see Fig. 5A). In another example of the method 600, the colloidal suspension component 118 includes a plurality of particles 206 suspended in a liquid 208.

With reference again to Figs. 1A, 1B, 2A, 2B, 3, 5A-B and 7, in one or more examples, a method 700 (see Fig. 7) for applying a coating with plural components includes the method 500 of Figs. 5A-B. The method 700 begins at 702 where suspension of the plurality of particles 206 in the liquid 208 is maintained for the colloidal suspension component 118 in the gravity feed container 116. In a further example, the method 700 also includes mixing 704 the colloidal suspension component 118 in the gravity feed container 116 using agitation or recirculation. In an even further example, the method 700 also includes receiving 706 regulated compressed air 132 at a regulated pneumatic inlet 130 of the gravity feed container 116 from a compressed air source 108. At 708, the colloidal suspension component 118 in the gravity feed container 116 is stirred using an agitator 134 in response to the receiving 706 of the regulated compressed air 132. In another even further example, the method also includes recirculating 710 the colloidal suspension component 118 in the gravity feed container 116 using a colloidal pump 302. In another example, the method 700 begins at 712 where the colloidal suspension component 118 is gravity fed from the gravity feed container 116 to the colloidal feed inlet 114 during operation of the spray gun assembly 100. The method 700 continues from 708, 710 and 712 to 504 (see Fig. 5A).

With reference again to Figs. 1A, 1B, 3, 5A-B and 8, in one or more examples of a method 800 (see Fig. 8) for applying a coating with plural components, the catalyst component 126 is received from a pressurized feed container 124. The method 800 includes the method 500 of Figs. 5A-B. The method 800 begins at 802 where the catalyst component 126 is held in the pressurized feed container 124. In another example, the method 800 also begins at 804 where regulated compressed air 138 is received from the compressed air source 108 at a regulated pneumatic inlet 136 of the pressurized feed container 124. At 806, the catalyst component 126 is held in a bladder 140 of the pressurized feed container 124. At 808, a pressurized catalyst flow 142 is provided from the bladder 140 to the pressurized feed inlet 122 of the spray gun assembly 100 in response to receiving the regulated compressed air 138. In yet another example, the method 800 begins at 810 where a pressurized catalyst flow 142 is provided from the pressurized feed container 124 to the pressurized feed inlet 122 of the spray gun assembly 100 using a catalyst pump 304. The method 800 continues from 802, 808 and 810 to 506 (see Fig. 5A).

With reference again to Figs. 1A, 1B, 4, 5A-B and 9, in one or more examples, a method 900 (see Fig. 9) for applying a coating with plural components includes the method 500 of Figs. 5A-B and continues from 520 to 902 where an atomizing air pressure 404 within the atomizing air flow path 110 is adjusted during operation of the spray gun assembly 100 using an atomizing air adjustment mechanism 402. The method 900 also continues from 520 to 904 where a fan air pressure 408 within the fan air flow path 112 is adjusted during operation of the spray gun assembly 100 using a fan air adjustment mechanism 406. The method 900 continues from 902 and 904 to 522 (see Fig. 5B).

With reference again to Figs. 1A, 1B, 5A-B and 10, in one or more examples, a method 1000 (see Fig. 10) for applying a coating with plural components includes the method 500 of Figs. 5A-B and continues from 508 to 1002 where the colloidal flow 152 is routed to the atomizing air flow path 110 via a colloidal flow path 148 of the spray gun assembly 100. The method 1000 also continues from 514 to 1004 where the catalyst flow 142 is routed to the fan air flow path 112 via a catalyst flow path 150 of the spray gun assembly 100. In another example, the method 1000 also includes adjusting 1006 a colloidal flow 152 within the colloidal flow path 148 during operation of the spray gun assembly 100 using a colloidal adjustment mechanism 410. In yet another example, the method 1000 also includes adjusting 1008 a catalyst flow 142 within the catalyst flow path 150 during operation of the spray gun assembly 100 using a catalyst adjustment mechanism 412. The method 1000 continues from 1006 and 1008 to 522 (see Fig. 5B).

With reference again to Figs. 1A, 1B, 5A-B and 11, in one or more examples, a method 1100 (see Fig. 11) for applying a coating with plural components includes the method 500 of Figs. 5A-B and continues from 516 to 1102 where atomization of the catalyst component 126 is initiated in response to the compressed air 106 in the fan air flow path 112. The method 1100 also continues from 522 to 1104 where the colloidal suspension component 118 is activated after the mixing of the catalyst component 126 and the colloidal suspension component 118 to form the coating. The method 1100 continues from 1102 to 520 (see Fig. 5B).

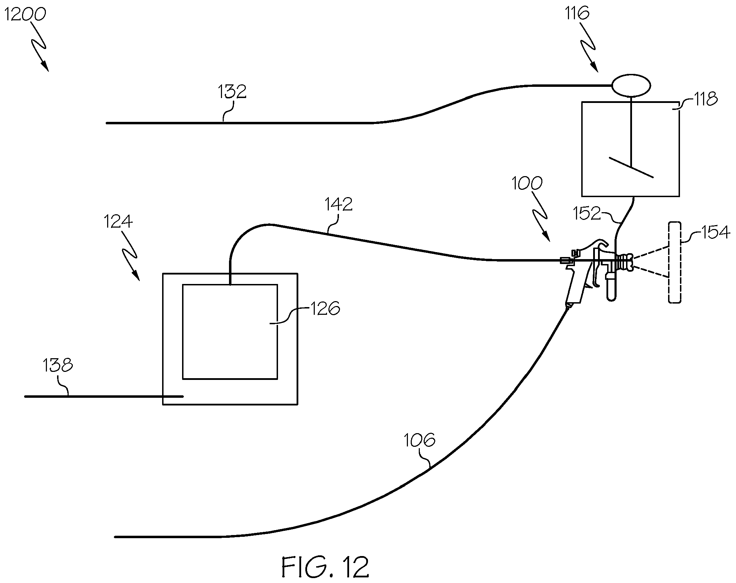

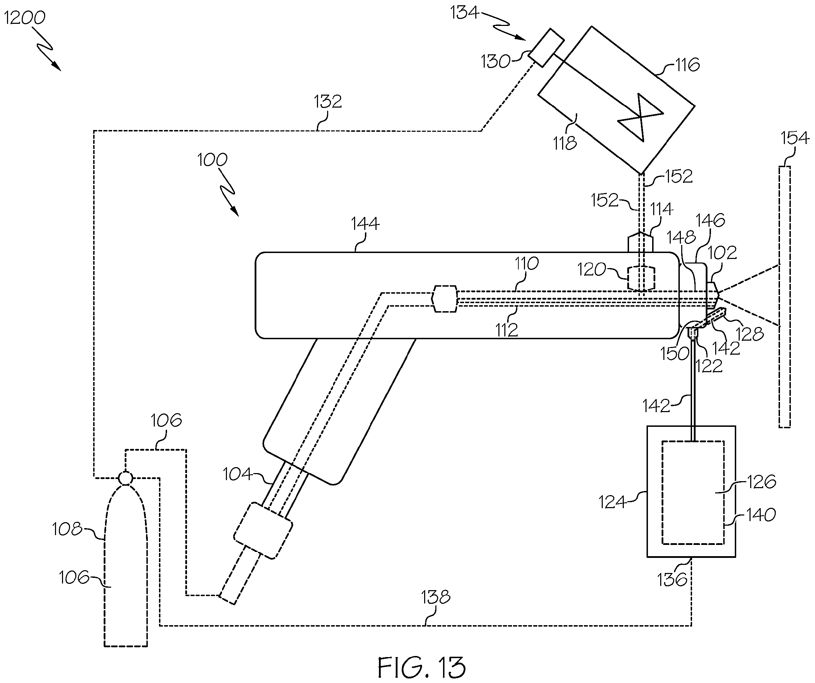

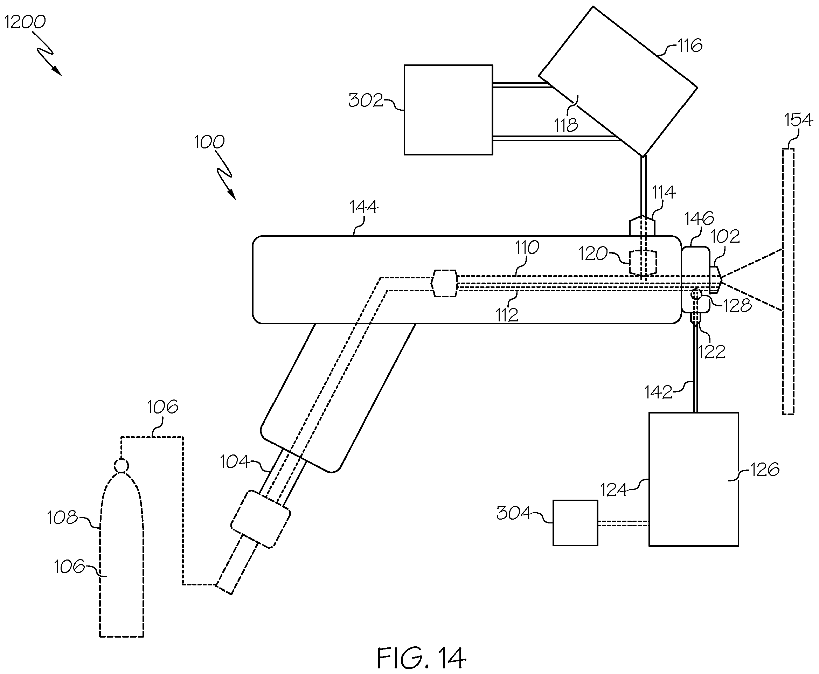

Referring generally to Figs. 1A, 1B, 2A, 2B, 3, 4 and 12-14 by way of examples, the present disclosure is directed to a system 1200 for applying a coating with plural components. Figs. 1A and 1B disclose examples of the spray gun assembly 100. Fig. 2A shows an end view of an example of a nozzle 102 used in the spray gun assembly 100. Fig. 2B provides a drawing that represents an example of a colloidal suspension component 118 used by the spray gun assembly 100. Fig. 3 provides a functional diagram of another example of the spray gun assembly 100. Fig. 4 provides a functional diagram showing various examples of adjustment mechanisms 402, 406, 410, 412 for the spray gun assembly 100. Fig. 12-14 disclose several examples of the system 1200.

With reference again to Figs. 1A, 1B, 2A, 2B, 3, 4 and 12-14, in one or more examples, a system 1200 for applying a coating with plural components includes a gravity feed container 116, a pressurized feed container 124 and a spray gun assembly 100. The gravity feed container 116 configured to hold a colloidal suspension component 118 of the coating. The pressurized feed container 124 configured to hold a catalyst component 126 of the coating. The spray gun assembly 100 configured to apply the coating with the plural components to a target substrate 154. The spray gun assembly 100 includes a nozzle 102, a main pneumatic inlet 104, an atomizing air flow path 110, a fan air flow path 112, a colloidal feed inlet 114, an internal atomizing outlet 120, a pressurized feed inlet 122 and a catalyst outlet 128. The nozzle 102 includes a main atomizing outlet 202 and a fan air outlet 204. The main pneumatic inlet 104 configured to receive compressed air 106 from a compressed air source 108. The atomizing air flow path 110 between the main pneumatic inlet 104 and the main atomizing outlet 202 of the nozzle 102. The fan air flow path 112 between the main pneumatic inlet 104 and the fan air outlet 204 of the nozzle 102. The a colloidal feed inlet 114 in fluid communication with a gravity feed container 116 and configured to receive the colloidal suspension component 118 from the gravity feed container 116. The internal atomizing outlet 120 in fluid communication with the colloidal feed inlet 114 and the atomizing air flow path 110 proximate the nozzle 102. The pressurized feed inlet 122 in fluid communication with a pressurized feed container 124 and configured to receive the catalyst component 126 from the pressurized feed container 124. The catalyst outlet 128 in fluid communication with the pressurized feed inlet 122 and the fan air flow path 112 proximate the nozzle 102.

In another example of the system 1200, the colloidal suspension component 118 includes a plurality of particles 206 suspended in a liquid 208. In a further example, the gravity feed container 116 is configured to maintain suspension of the plurality of particles 206 in the liquid 208.

In yet another example of the system 1200, the gravity feed container 116 uses agitation or recirculation to mix the colloidal suspension component 118.

In still another example of the system 1200, the gravity feed container 116 includes a regulated pneumatic inlet 130 and an agitator 134. The regulated pneumatic inlet 130 configured to receive regulated compressed air 132 from the compressed air source 108. The agitator 134 is configured to receive the regulated compressed air 132 via the regulated pneumatic inlet 130 and configured to stir the colloidal suspension component 118 in response to receiving the regulated compressed air 132.

In still yet another example of the system 1200, the gravity feed container 116 includes a colloidal pump 302 configured to recirculate the colloidal suspension component 118.

In another example of the system 1200, the colloidal suspension component 118 is gravity fed from the gravity feed container 116 to the colloidal feed inlet 114 during operation of the spray gun assembly 100.

In yet another example of the system 1200, the pressurized feed container 124 includes a regulated pneumatic inlet 136 and a bladder 140. The regulated pneumatic inlet 136 configured to receive regulated compressed air 138 from the compressed air source 108. The bladder 140 configured to hold the catalyst component 126 and to provide a catalyst flow 142 from the pressurized feed container 124 to the pressurized feed inlet 122 of the spray gun assembly 100 in response to receiving the regulated compressed air 138.

In still another example of the system 1200, the pressurized feed container 124 includes a catalyst pump 304 configured to provide a catalyst flow 142 from the pressurized feed container 124 to the pressurized feed inlet 122 of the spray gun assembly 100.

In still yet another example of the system 1200, the catalyst component 126 is configured to activate the colloidal suspension component 118 after contact therewith to form the coating.

In another example of the system 1200, during operation of the spray gun assembly 100, the atomizing air flow path 110 extends through the main atomizing outlet 202 of the nozzle 102 and the fan air flow path 112 extends through the fan air outlet 204 of the nozzle 102.

In yet another example of the system 1200, the spray gun assembly 100 also includes a spray gun body 144. The spray gun body 144 includes the main pneumatic inlet 104, the atomizing air flow path 110, an atomizing air adjustment mechanism 402 configured to control an atomizing air pressure 404 within the atomizing air flow path 110 during operation of the spray gun assembly 100, the fan air flow path 112 and a fan air adjustment mechanism 406 configured to control a fan air pressure 408 within the fan air flow path 112 during operation of the spray gun assembly 100.

In still another example of the system 1200, the spray gun assembly 100 also includes an air cap assembly 146 disposed proximate the nozzle 102 and in fluid communication with the atomizing air flow path 110 and the fan air flow path 112. The air cap assembly 146 includes the colloidal feed inlet 114, the internal atomizing outlet 120, a colloidal flow path 148 between the colloidal feed inlet 114 and the internal atomizing outlet 120, a colloidal adjustment mechanism 410 configured to control a colloidal flow 152 within the colloidal flow path 148 during operation of the spray gun assembly 100, the pressurized feed inlet 122, the catalyst outlet 128, a catalyst flow path 150 between the pressurized feed inlet 122 and the catalyst outlet 128 and a catalyst adjustment mechanism 412 configured to control a catalyst flow 142 within the catalyst flow path 150 during operation of the spray gun assembly 100.

Examples of the spray gun assembly 100, methods 500, 600, 700, 800, 900, 1000, 1100 and system 1200 for applying a coating with plural components may be related to or used in the context of aircraft manufacturing. Although an aircraft example is described, the examples and principles disclosed herein may be applied to other products in the aerospace industry and other industries, such as the automotive industry, the space industry, the construction industry and other design and manufacturing industries. Accordingly, in addition to aircraft, the examples and principles disclosed herein may apply to the use of coatings in the manufacture of various types of vehicles and in the construction of various types of buildings.

The preceding detailed description refers to the accompanying drawings, which illustrate specific examples described by the present disclosure. Other examples having different structures and operations do not depart from the scope of the present disclosure. Like reference numerals may refer to the same feature, element, or component in the different drawings. Throughout the present disclosure, any one of a plurality of items may be referred to individually as the item and a plurality of items may be referred to collectively as the items and may be referred to with like reference numerals. Moreover, as used herein, a feature, element, component, or step preceded with the word "a" or "an" should be understood as not excluding a plurality of features, elements, components, or steps, unless such exclusion is explicitly recited.

Illustrative, non-exhaustive examples, which may be, but are not necessarily, claimed, of the subject matter according to the present disclosure are provided above. Reference herein to "example" means that one or more feature, structure, element, component, characteristic and/or operational step described in connection with the example is included in at least one aspect, embodiment and/or implementation of the subject matter according to the present disclosure. Thus, the phrases "an example," "another example," "one or more examples," and similar language throughout the present disclosure may, but do not necessarily, refer to the same example. Further, the subject matter characterizing any one example may, but does not necessarily, include the subject matter characterizing any other example. Moreover, the subject matter characterizing any one example may be, but is not necessarily, combined with the subject matter characterizing any other example.

As used herein, a system, apparatus, device, structure, article, element, component, or hardware "configured to" perform a specified function is indeed capable of performing the specified function without any alteration, rather than merely having potential to perform the specified function after further modification. In other words, the system, apparatus, device, structure, article, element, component, or hardware "configured to" perform a specified function is specifically selected, created, implemented, utilized, programmed and/or designed for the purpose of performing the specified function. As used herein, "configured to" denotes existing characteristics of a system, apparatus, structure, article, element, component, or hardware that enable the system, apparatus, structure, article, element, component, or hardware to perform the specified function without further modification. For purposes of this disclosure, a system, apparatus, device, structure, article, element, component, or hardware described as being "configured to" perform a particular function may additionally or alternatively be described as being "adapted to" and/or as being "operative to" perform that function.

Unless otherwise indicated, the terms "first," "second," "third," etc. are used herein merely as labels and are not intended to impose ordinal, positional, or hierarchical requirements on the items to which these terms refer. Moreover, reference to, e.g., a "second" item does not require or preclude the existence of, e.g., a "first" or lower-numbered item and/or, e.g., a "third" or higher-numbered item.

As used herein, the phrase "at least one of," when used with a list of items, means different combinations of one or more of the listed items may be used and only one of each item in the list may be needed. For example, "at least one of item A, item B and item C" may include, without limitation, item A or item A and item B. This example also may include item A, item B and item C or item B and item C. In other examples, "at least one of' may be, for example, without limitation, two of item A, one of item B and ten of item C; four of item B and seven of item C; and other suitable combinations. As used herein, the term "and/or" and the "/" symbol includes any and all combinations of one or more of the associated listed items.

As used herein, the terms "coupled," "coupling," and similar terms refer to two or more elements that are joined, linked, fastened, attached, connected, put in communication, or otherwise associated (e.g., mechanically, electrically, fluidly, optically, electromagnetically) with one another. In various examples, the elements may be associated directly or indirectly. As an example, element A may be directly associated with element B. As another example, element A may be indirectly associated with element B, for example, via another element C. It will be understood that not all associations among the various disclosed elements are necessarily represented. Accordingly, couplings other than those depicted in the figures may also exist.

As used herein, the term "approximately" refers to or represents a condition that is close to, but not exactly, the stated condition that still performs the desired function or achieves the desired result. As an example, the term "approximately" refers to a condition that is within an acceptable predetermined tolerance or accuracy, such as to a condition that is within 10% of the stated condition. However, the term "approximately" does not exclude a condition that is exactly the stated condition. As used herein, the term "substantially" refers to a condition that is essentially the stated condition that performs the desired function or achieves the desired result.

In Figs. 1A, 1B, 2A, 2B, 3, 4 and 12-14, referred to above, may represent functional elements, features, or components thereof and do not necessarily imply any particular structure. Accordingly, modifications, additions and/or omissions may be made to the illustrated structure. Additionally, those skilled in the art will appreciate that not all elements, features and/or components described and illustrated in Figs. 1A, 1B, 2A, 2B, 3, 4 and 12-14, referred to above, need be included in every example and not all elements, features and/or components described herein are necessarily depicted in each illustrative example. Accordingly, some of the elements, features and/or components described and illustrated in Figs. 1A, 1B, 2A, 2B, 3, 4 and 12-14 may be combined in various ways without the need to include other features described and illustrated in Figs. 1A, 1B, 2A, 2B, 3, 4 and 12-14, other drawing figures and/or the accompanying disclosure, even though such combination or combinations are not explicitly illustrated herein. Similarly, additional features not limited to the examples presented, may be combined with some or all the features shown and described herein. Unless otherwise explicitly stated, the schematic illustrations of the examples depicted in Figs. 1A, 1B, 2A, 2B, 3, 4 and 12-14, referred to above, are not meant to imply structural limitations with respect to the illustrative example. Rather, although one illustrative structure is indicated, it is to be understood that the structure may be modified when appropriate. Accordingly, modifications, additions and/or omissions may be made to the illustrated structure. Furthermore, elements, features and/or components that serve a similar, or at least substantially similar, purpose are labeled with like numbers in each of Figs. 1A, 1B, 2A, 2B, 3, 4 and 12-14 and such elements, features and/or components may not be discussed in detail herein with reference to each of Figs. 1A, 1B, 2A, 2B, 3, 4 and 12-14. Similarly, all elements, features and/or components may not be labeled in each of Figs. 1A, 1B, 2A, 2B, 3, 4 and 12-14, but reference numerals associated therewith may be utilized herein for consistency.

In Figs. 5A-B and 6-11, referred to above, the blocks may represent operations, steps and/or portions thereof and lines connecting the various blocks do not imply any particular order or dependency of the operations or portions thereof. It will be understood that not all dependencies among the various disclosed operations are necessarily represented. Figs. 5A-B and 6-11 and the accompanying disclosure describing the operations of the disclosed methods set forth herein should not be interpreted as necessarily determining a sequence in which the operations are to be performed. Rather, although one illustrative order is indicated, it is to be understood that the sequence of the operations may be modified when appropriate. Accordingly, modifications, additions and/or omissions may be made to the operations illustrated and certain operations may be performed in a different order or simultaneously. Additionally, those skilled in the art will appreciate that not all operations described need be performed.

Further, references throughout the present specification to features, advantages, or similar language used herein do not imply that all the features and advantages that may be realized with the examples disclosed herein should be, or are in, any single example. Rather, language referring to the features and advantages is understood to mean that a specific feature, advantage, or characteristic described in connection with an example is included in at least one example. Thus, discussion of features, advantages and similar language used throughout the present disclosure may, but does not necessarily, refer to the same example.

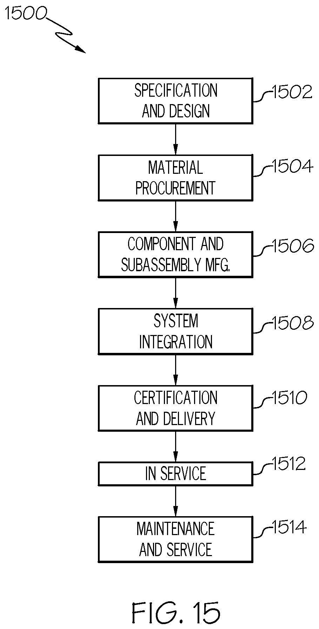

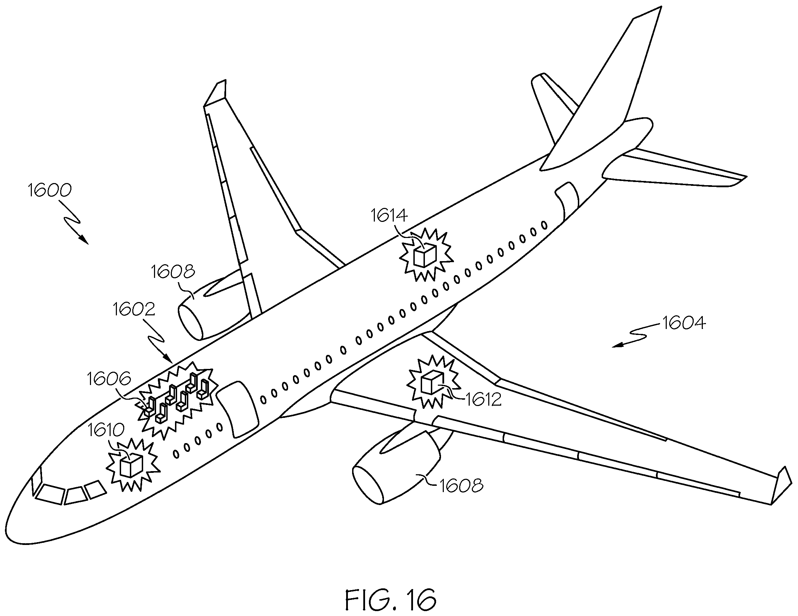

Examples of the subject matter disclosed herein may be described in the context of aircraft manufacturing and service method 1500 as shown in Fig. 15 and aircraft 1600 as shown in Fig. 16. In one or more examples, the disclosed methods and systems for associating test data for a part under test with an end item coordinate system may be used in aircraft manufacturing. During pre-production, the service method 1500 may include specification and design (block 1502) of aircraft 1600 and material procurement (block 1504). During production, component and subassembly manufacturing (block 1506) and system integration (block 1508) of aircraft 1600 may take place. Thereafter, aircraft 1600 may go through certification and delivery (block 1510) to be placed in service (block 1512). While in service, aircraft 1600 may be scheduled for routine maintenance and service (block 1514). Routine maintenance and service may include modification, reconfiguration, refurbishment, etc. of one or more systems of aircraft 1600.

Each of the processes of the service method 1500 may be performed or carried out by a system integrator, a third party and/or an operator (e.g., a customer). For the purposes of this description, a system integrator may include, without limitation, any number of aircraft manufacturers and major-system subcontractors; a third party may include, without limitation, any number of vendors, subcontractors and suppliers; and an operator may be an airline, leasing company, military entity, service organization and so on.

As shown in Fig. 16, aircraft 1600 produced by the service method 1500 may include airframe 1602 with a plurality of high-level systems 1604 and interior 1606. Examples of high-level systems 1604 include one or more of propulsion system 1608, electrical system 1610, hydraulic system 1612 and environmental system 1614. Any number of other systems may be included. Although an aerospace example is shown, the principles disclosed herein may be applied to other industries, such as the automotive industry. Accordingly, in addition to aircraft 1600, the principles disclosed herein may apply to other vehicles, e.g., land vehicles, marine vehicles, space vehicles, etc.

The disclosed systems and methods for associating test data for a part under test with an end item coordinate system may be employed during any one or more of the stages of the manufacturing and service method 1500. For example, components or subassemblies corresponding to component and subassembly manufacturing (block 1506) may be fabricated or manufactured in a manner similar to components or subassemblies produced while aircraft 1600 is in service (block 1512). Also, one or more examples of the system(s), method(s), or combination thereof may be utilized during production stages (block 1506 and block 1508), for example, by substantially expediting assembly of or reducing the cost of aircraft 1600. Similarly, one or more examples of the system or method realizations, or a combination thereof, may be utilized, for example and without limitation, while aircraft 1600 is in service (block 1512) and/or during maintenance and service (block 1514).

Further, the disclosure comprises examples according to the following clauses:
Clause 1. A spray gun assembly for applying a coating with plural components, the spray gun assembly comprising: a nozzle with a main atomizing outlet and a fan air outlet; a main pneumatic inlet configured to receive compressed air from a compressed air source; an atomizing air flow path between the main pneumatic inlet and the main atomizing outlet of the nozzle; a fan air flow path between the main pneumatic inlet and the fan air outlet of the nozzle; a colloidal feed inlet in fluid communication with a gravity feed container and configured to receive a colloidal suspension component of the coating via gravity feed from the gravity feed container; an internal atomizing outlet in fluid communication with the colloidal feed inlet and the atomizing air flow path proximate the nozzle; a pressurized feed inlet in fluid communication with a pressurized feed container and configured to receive a catalyst component of the coating from the pressurized feed container; and a catalyst outlet in fluid communication with the pressurized feed inlet and the fan air flow path proximate the nozzle.
Clause 2. The spray gun assembly of Clause 1 wherein the gravity feed container is configured to hold the colloidal suspension component.
Clause 3. The spray gun assembly of Clause 1 or 2 wherein the colloidal suspension component comprises a plurality of particles suspended in a liquid.
Clause 4. The spray gun assembly of Clause 3, wherein the gravity feed container is configured to maintain suspension of the plurality of particles in the liquid.
Clause 5. The spray gun assembly of any of Clauses 1 to 4, wherein the gravity feed container uses agitation or recirculation to mix the colloidal suspension component.
Clause 6. The spray gun assembly of any of Clauses 1 to 5, the gravity feed container comprising: a regulated pneumatic inlet configured to receive regulated compressed air from the compressed air source; and an agitator configured to receive the regulated compressed air via the regulated pneumatic inlet and configured to stir the colloidal suspension component in response to receiving the regulated compressed air.
Clause 7. The spray gun assembly of any of Clauses 1 to 6, the gravity feed container comprising: a colloidal pump configured to recirculate the colloidal suspension component.
Clause 8. The spray gun assembly of any of Clauses 1 to 7, wherein the colloidal suspension component is gravity fed from the gravity feed container to the colloidal feed inlet during operation of the spray gun assembly.
Clause 9. The spray gun assembly of any of Clauses 1 to 8, wherein the pressurized feed container is configured to hold the catalyst component.
Clause 10. The spray gun assembly of any of Clauses 1 to 9, the pressurized feed container comprising: a regulated pneumatic inlet configured to receive regulated compressed air from the compressed air source; and a bladder configured to hold the catalyst component and to provide a catalyst flow from the pressurized feed container to the pressurized feed inlet of the spray gun assembly in response to receiving the regulated compressed air.
Clause 11. The spray gun assembly of any of Clauses 1 to 10, the pressurized feed container comprising: a catalyst pump configured to provide a catalyst flow from the pressurized feed container to the pressurized feed inlet of the spray gun assembly.
Clause 12. The spray gun assembly of any of Clauses 1 to 11, wherein the catalyst component is configured to activate the colloidal suspension component after contact therewith to form the coating.
Clause 13. The spray gun assembly of any of Clauses 1 to 12, wherein, during operation of the spray gun assembly, the atomizing air flow path extends through the main atomizing outlet of the nozzle and the fan air flow path extends through the fan air outlet of the nozzle.
Clause 14. The spray gun assembly of any of Clauses 1 to 13, further comprising: an atomizing air adjustment mechanism configured to control an atomizing air pressure within the atomizing air flow path during operation of the spray gun assembly.
Clause 15. The spray gun assembly of any of Clauses 1 to 14, further comprising: a fan air adjustment mechanism configured to control a fan air pressure within the fan air flow path during operation of the spray gun assembly.
Clause 16. The spray gun assembly of any of Clauses 1 to 15, further comprising: a spray gun body, comprising: the main pneumatic inlet; the atomizing air flow path; and the fan air flow path.
Clause 17. The spray gun assembly of any of Clauses 1 to 16, further comprising: an air cap assembly disposed proximate the nozzle and in fluid communication with the atomizing air flow path and the fan air flow path, the air cap assembly comprising: the colloidal feed inlet; the internal atomizing outlet; a colloidal flow path between the colloidal feed inlet and the internal atomizing outlet; the pressurized feed inlet; the catalyst outlet; and a catalyst flow path between the pressurized feed inlet and the catalyst outlet.
Clause 18. The spray gun assembly of Clause 17, the air cap assembly further comprising: a colloidal adjustment mechanism configured to control a colloidal flow within the colloidal flow path during operation of the spray gun assembly.
Clause 19. The spray gun assembly of Clause 17 or 18, the air cap assembly further comprising: a catalyst adjustment mechanism configured to control a catalyst flow within the catalyst flow path during operation of the spray gun assembly.
Clause 20. A method for applying a coating with plural components, the method comprising: receiving compressed air at an atomizing air flow path and a fan air flow path of a spray gun assembly; receiving a colloidal flow of a colloidal suspension component of the coating via gravity feed at a colloidal feed inlet of the spray gun assembly; receiving a catalyst flow of a catalyst component of the coating at a catalyst feed inlet of the spray gun assembly; routing the colloidal flow to the atomizing air flow path of the spray gun assembly; initiating atomization of the colloidal suspension component in response to the compressed air flowing through the atomizing air flow path; routing the colloidal suspension component, in at least partially atomized form, to a main atomizing outlet in a nozzle of the spray gun assembly in response to the compressed air flowing through the atomizing air flow path; routing the compressed air flowing in the fan air flow path to a fan air outlet of the nozzle; routing the catalyst flow to a catalyst outlet of the spray gun assembly proximate the fan air outlet of the nozzle; continuing atomization of the colloidal suspension after exiting the main atomizing outlet in response to the compressed air flowing out the main atomizing outlet of the nozzle; atomizing the catalyst component after exiting the fan air outlet and in response to compressed air flowing through the fan air flow path and out the fan air outlet of the nozzle; and mixing the catalyst component, in atomized form, with the colloidal suspension component, in atomized form, while in flight from the spray gun assembly to a target substrate.
Clause 21. The method of Clause 20, wherein the compressed air is received from a compressed air source.
Clause 22. The method of Clause 20 or 21, wherein the colloidal suspension component is received from a gravity feed container.
Clause 23. The method of Clause 22, further comprising: holding the colloidal suspension component in the gravity feed container.
Clause 24. The method of Clause 22 or 23, wherein the colloidal suspension component comprises a plurality of particles suspended in a liquid.
Clause 25. The method of Clause 24, further comprising: maintaining suspension of the plurality of particles in the liquid for the colloidal suspension component in the gravity feed container.
Clause 26. The method of Clause 25, further comprising: mixing the colloidal suspension component in the gravity feed container using agitation or recirculation.
Clause 27. The method of Clause 26, further comprising: receiving regulated compressed air at a regulated pneumatic inlet of the gravity feed container from a compressed air source; and stirring the colloidal suspension component in the gravity feed container using an agitator in response to the receiving of the regulated compressed air.
Clause 28. The method of Clause 26 or 27, further comprising: recirculating the colloidal suspension component in the gravity feed container using a colloidal pump.
Clause 29. The method of any of Clauses 22 to 28, further comprising: gravity feeding the colloidal suspension component from the gravity feed container to the colloidal feed inlet during operation of the spray gun assembly.
Clause 30. The method of any of Clauses 20 to 29, wherein the catalyst component is received from a pressurized feed container.
Clause 31. The method of Clause 30, further comprising: holding the catalyst component in the pressurized feed container.
Clause 32. The method of Clause 30 or 31, further comprising: receiving regulated compressed air from the compressed air source at a regulated pneumatic inlet of the pressurized feed container; holding the catalyst component in a bladder of the pressurized feed container; and providing a pressurized catalyst flow from the bladder to the pressurized feed inlet of the spray gun assembly in response to receiving the regulated compressed air.
Clause 33. The method of any of Clauses 30 to 32, further comprising: providing a pressurized catalyst flow from the pressurized feed container to the pressurized feed inlet of the spray gun assembly using a catalyst pump .
Clause 34. The method of any of Clauses 20 to 34, further comprising: adjusting an atomizing air pressure within the atomizing air flow path during operation of the spray gun assembly using an atomizing air adjustment mechanism.
Clause 35. The method of any of Clauses 20 to 34, further comprising: adjusting a fan air pressure within the fan air flow path during operation of the spray gun assembly using a fan air adjustment mechanism.
Clause 36. The method of any of Clauses 20 to 35, further comprising: routing the colloidal flow to the atomizing air flow path via a colloidal flow path of the spray gun assembly; and routing the catalyst flow to the fan air flow path via a catalyst flow path of the spray gun assembly.
Clause 37. The method of Clause 36, further comprising: adjusting a colloidal flow within the colloidal flow path during operation of the spray gun assembly using a colloidal adjustment mechanism.
Clause 38. The method of Clause 36 or 37, further comprising: adjusting a catalyst flow within the catalyst flow path during operation of the spray gun assembly using a catalyst adjustment mechanism.
Clause 39. The method of any of Clauses 20 to 38, further comprising: initiating atomization of the catalyst component in response to the compressed air in the fan air flow path.
Clause 40. The method of any of Clauses 20 to 39, further comprising: activating the colloidal suspension component after the mixing of the catalyst component and the colloidal suspension component to form the coating.
Clause 41. A system for applying a coating with plural components, the system comprising: a gravity feed container configured to hold a colloidal suspension component of the coating; a pressurized feed container configured to hold a catalyst component of the coating; and a spray gun assembly configured to apply the coating with the plural components to a target substrate, the spray gun assembly comprising: a nozzle with a main atomizing outlet and a fan air outlet; a main pneumatic inlet configured to receive compressed air from a compressed air source; an atomizing air flow path between the main pneumatic inlet and the main atomizing outlet of the nozzle; a fan air flow path between the main pneumatic inlet and the fan air outlet of the nozzle; a colloidal feed inlet in fluid communication with a gravity feed container and configured to receive the colloidal suspension component from the gravity feed container; an internal atomizing outlet in fluid communication with the colloidal feed inlet and the atomizing air flow path proximate the nozzle; a pressurized feed inlet in fluid communication with a pressurized feed container and configured to receive the catalyst component from the pressurized feed container; and a catalyst outlet in fluid communication with the pressurized feed inlet and the fan air flow path proximate the nozzle.
Clause 42. The system of Clause 41, wherein the colloidal suspension component comprises a plurality of particles suspended in a liquid.
Clause 43. The system of Clause 42, wherein the gravity feed container is configured to maintain suspension of the plurality of particles in the liquid.
Clause 44. The system of Clause 41 to 43, wherein the gravity feed container uses agitation or recirculation to mix the colloidal suspension component.
Clause 45. The system of any of Clauses 41 to 44, the gravity feed container comprising: a regulated pneumatic inlet configured to receive regulated compressed air from the compressed air source; and an agitator configured to receive the regulated compressed air via the regulated pneumatic inlet and configured to stir the colloidal suspension component in response to receiving the regulated compressed air.
Clause 46. The system of any of Clauses 41 to 45, the gravity feed container comprising: a colloidal pump configured to recirculate the colloidal suspension component.
Clause 47. The system of any of Clauses 41 to 46 wherein the colloidal suspension component is gravity fed from the gravity feed container to the colloidal feed inlet during operation of the spray gun assembly.
Clause 48. The system of any of Clauses 41 to 47, the pressurized feed container comprising: a regulated pneumatic inlet configured to receive regulated compressed air from the compressed air source; and a bladder configured to hold the catalyst component and to provide a catalyst flow from the pressurized feed container to the pressurized feed inlet of the spray gun assembly in response to receiving the regulated compressed air.
Clause 49. The system of any of Clauses 41 to 48, the pressurized feed container comprising: a catalyst pump configured to provide a catalyst flow from the pressurized feed container to the pressurized feed inlet of the spray gun assembly.
Clause 50. The system of Clause 41, wherein the catalyst component is configured to activate the colloidal suspension component after contact therewith to form the coating.
Clause 51. The system of any of Clauses 41 to 50, wherein, during operation of the spray gun assembly, the atomizing air flow path extends through the main atomizing outlet of the nozzle and the fan air flow path extends through the fan air outlet of the nozzle.
Clause 52. The system of any of Clauses 41 to 51, the spray gun assembly further comprising: a spray gun body, comprising: the main pneumatic inlet; the atomizing air flow path; an atomizing air adjustment mechanism configured to control an atomizing air pressure within the atomizing air flow path during operation of the spray gun assembly; the fan air flow path; and a fan air adjustment mechanism configured to control a fan air pressure within the fan air flow path during operation of the spray gun assembly.
Clause 53. The system of any of Clauses 41 to 52, the spray gun assembly further comprising: an air cap assembly disposed proximate the nozzle and in fluid communication with the atomizing air flow path and the fan air flow path, the air cap assembly comprising: the colloidal feed inlet; the internal atomizing outlet; a colloidal flow path between the colloidal feed inlet and the internal atomizing outlet; a colloidal adjustment mechanism configured to control a colloidal flow within the colloidal flow path during operation of the spray gun assembly; the pressurized feed inlet; the catalyst outlet; a catalyst flow path between the pressurized feed inlet and the catalyst outlet; and a catalyst adjustment mechanism configured to control a catalyst flow within the catalyst flow path during operation of the spray gun assembly.

The described features, advantages and characteristics of one example may be combined in any suitable manner in one or more other examples. One skilled in the relevant art will recognize that the examples described herein may be practiced without one or more of the specific features or advantages of a particular example. In other instances, additional features and advantages may be recognized in certain examples that may not be present in all examples. Furthermore, although various examples of the spray gun assemblies 100, methods 500, 600, 700, 800, 900, 1000, 1100 and systems 1200 for applying a coating with plural components have been shown and described, modifications may occur to those skilled in the art upon reading the specification. The present application includes such modifications and is limited only by the scope of the claims.

What is claimed is:

## Claims

1. A spray gun assembly (100) for applying a coating with plural components, the spray gun assembly (100) comprising:
a nozzle (102) with a main atomizing outlet (202) and a fan air outlet (204);
a main pneumatic inlet (104) configured to receive compressed air (106) from a compressed air source (108);
an atomizing air flow path (110) between the main pneumatic inlet (104) and the main atomizing outlet (202) of the nozzle (102);
a fan air flow path (112) between the main pneumatic inlet (104) and the fan air outlet (204) of the nozzle (102);
a colloidal feed inlet (114) in fluid communication with a gravity feed container (116) and configured to receive a colloidal suspension component (118) of the coating via gravity feed from the gravity feed container (116);
an internal atomizing outlet (120) in fluid communication with the colloidal feed inlet (114) and the atomizing air flow path (110) proximate the nozzle (102);
a pressurized feed inlet (122) in fluid communication with a pressurized feed container (124) and configured to receive a catalyst component (126) of the coating from the pressurized feed container (124); and
a catalyst outlet (128) in fluid communication with the pressurized feed inlet (122) and the fan air flow path (112) proximate the nozzle (102).

2. The spray gun assembly of Claim 1, wherein the gravity feed container (116) is configured to hold the colloidal suspension component (118).

3. The spray gun assembly of Claim 1, wherein the colloidal suspension component (118) comprises a plurality of particles (206) suspended in a liquid (208).

4. The spray gun assembly of Claim 3, wherein the gravity feed container (116) is configured to maintain suspension of the plurality of particles (206) in the liquid (208).

5. The spray gun assembly of Claim 1, wherein the gravity feed container (116) uses agitation or recirculation to mix the colloidal suspension component (118).

6. The spray gun assembly of Claim 1, the gravity feed container (116) comprising:
a regulated pneumatic inlet (130) configured to receive regulated compressed air (132) from the compressed air source (108); and
an agitator (134) configured to receive the regulated compressed air (132) via the regulated pneumatic inlet (130) and configured to stir the colloidal suspension component (118) in response to receiving the regulated compressed air (132).

7. The spray gun assembly of Claim 1, the gravity feed container (116) comprising:
a colloidal pump (302) configured to recirculate the colloidal suspension component (118).

8. The spray gun assembly of Claim 1, wherein the colloidal suspension component (118) is gravity fed from the gravity feed container (116) to the colloidal feed inlet (114) during operation of the spray gun assembly (100).

9. The spray gun assembly of Claim 1, wherein the pressurized feed container (124) is configured to hold the catalyst component (126).

10. The spray gun assembly of Claim 1, the pressurized feed container (124) comprising:
a regulated pneumatic inlet (136) configured to receive regulated compressed air (138) from the compressed air source (108); and
a bladder (140) configured to hold the catalyst component (126) and to provide a catalyst flow (142) from the pressurized feed container (124) to the pressurized feed inlet (122) of the spray gun assembly (100) in response to receiving the regulated compressed air (138).

11. The spray gun assembly of Claim 1, the pressurized feed container (124) comprising:
a catalyst pump (304) configured to provide a catalyst flow (142) from the pressurized feed container (124) to the pressurized feed inlet (122) of the spray gun assembly (100).

12. The spray gun assembly of Claim 1, wherein the catalyst component (126) is configured to activate the colloidal suspension component (118) after contact therewith to form the coating.

13. The spray gun assembly of Claim 1, wherein, during operation of the spray gun assembly (100), the atomizing air flow path (110) extends through the main atomizing outlet (202) of the nozzle (102) and the fan air flow path (112) extends through the fan air outlet (204) of the nozzle (102).

14. A method (500) for applying a coating with plural components, the method comprising:
receiving (502) compressed air (106) at an atomizing air flow path (110) and a fan air flow path (112) of a spray gun assembly (100);
receiving (504) a colloidal flow (152) of a colloidal suspension component (118) of the coating via gravity feed at a colloidal feed inlet (114) of the spray gun assembly (100);
receiving (506) a catalyst flow (142) of a catalyst component (126) of the coating at a catalyst feed inlet of the spray gun assembly (100);
routing (508) the colloidal flow (152) to the atomizing air flow path (110) of the spray gun assembly (100);
initiating (510) atomization of the colloidal suspension component (118) in response to the compressed air (106) flowing through the atomizing air flow path (110);
routing (512) the colloidal suspension component (118), in at least partially atomized form, to a main atomizing outlet (202) in a nozzle (102) of the spray gun assembly (100) in response to the compressed air (106) flowing through the atomizing air flow path (110);
routing (514) the compressed air (106) flowing in the fan air flow path (112) to a fan air outlet (204) of the nozzle (102);
routing (516) the catalyst flow (142) to a catalyst outlet (128) of the spray gun assembly (100) proximate the fan air outlet (204) of the nozzle (102);
continuing (518) atomization of the colloidal suspension after exiting the main atomizing outlet (202) in response to the compressed air (106) flowing out the main atomizing outlet (202) of the nozzle (102);
atomizing (520) the catalyst component (126) after exiting the fan air outlet (204) and in response to compressed air (106) flowing through the fan air flow path (112) and out the fan air outlet (204) of the nozzle (102); and
mixing (522) the catalyst component (126), in atomized form, with the colloidal suspension component (118), in atomized form, while in flight from the spray gun assembly (100) to a target substrate (154).

15. A system (1200) for applying a coating with plural components, the system (1200) comprising:
a gravity feed container (116) configured to hold a colloidal suspension component (118) of the coating;
a pressurized feed container (124) configured to hold a catalyst component (126) of the coating; and
a spray gun assembly (100) configured to apply the coating with the plural components to a target substrate (154), the spray gun assembly (100) comprising:
a nozzle (102) with a main atomizing outlet (202) and a fan air outlet (204);
a main pneumatic inlet (104) configured to receive compressed air (106) from a compressed air source (108);
an atomizing air flow path (110) between the main pneumatic inlet (104) and the main atomizing outlet (202) of the nozzle (102);
a fan air flow path (112) between the main pneumatic inlet (104) and the fan air outlet (204) of the nozzle (102);
a colloidal feed inlet (114) in fluid communication with a gravity feed container (116) and configured to receive the colloidal suspension component (118) from the gravity feed container (116);
an internal atomizing outlet (120) in fluid communication with the colloidal feed inlet (114) and the atomizing air flow path (110) proximate the nozzle (102);
a pressurized feed inlet (122) in fluid communication with a pressurized feed container (124) and configured to receive the catalyst component (126) from the pressurized feed container (124); and
a catalyst outlet (128) in fluid communication with the pressurized feed inlet (122) and the fan air flow path (112) proximate the nozzle (102).
